# EUROPEAN PATENT SPECIFICATION

(11) **EP 1 880 754 B1**
(45) Date of publication and mention of the grant of the patent: **15.06.2011**
(21) Application number: 07112292.3
(22) Date of filing: 11.07.2007
(51) Int. Cl.: B01D 53/14, B01D 53/22

(54) **Carbon dioxide capture system**
System zur Erfassung von Kohlendioxid
Système de capture de dioxyde de carbone

(30) Priority: 17.07.2006 US 457840; 30.11.2006 US 564912
(43) Date of publication of application: 23.01.2008
(73) Proprietor: GENERAL ELECTRIC COMPANY, Schenectady, NY 12345 (US)
(72) Inventor: Finkenrath, Matthias, 81927 München (DE); Bartlett, Michael Adam, 80799 München (DE); Bowman, Michael John, Schenectady, NY 12309 (US); Evulet, Andrei Tristan, Clifton Park, NY 12065 (US); Sanborn, Stephen Duane, Copake, NY 12516 (US); Ruud, James Anthony, Delmar, NY 12054 (US); Liu, Ke, Ranch Santa Margarita, CA 92688 (US); Shockling, Michael Anthony, Halfmoon, NY 12065 (US)
(74) Representative: Illingworth-Law, William Illingworth

(56) References cited:
- EP-A- 1 733 781
- WO-A-98/13124
- WO-A-02/074421
- WO-A-03/008070
- WO-A-2004/069739

## Description

### BACKGROUND

This invention relates generally to carbon capture and more specifically to methods and systems for capturing carbon dioxide.

Before carbon dioxide (CO₂) gas can be sequestered from power plants and other point sources, it must be captured in a relatively pure form. On a mass basis, CO₂ is the nineteenth largest commodity chemical in the United States, and CO₂ is routinely separated and captured as a byproduct of industrial processes such as synthetic ammonia production, hydrogen (H₂) production or limestone calcination.

Existing CO₂ capture technologies, however, are not cost-effective when considered in the context of sequestering CO₂ from power plants. Most power plants and other large point sources use air-fired combustors, a process that exhausts CO₂ diluted with nitrogen. For efficient carbon sequestration, the CO₂ in these exhaust gases must be separated and concentrated.

CO₂ is currently recovered from combustion exhaust by using, for example, amine absorbers and cryogenic coolers. Examples of the recovery of CO2 can be found ini WO 2004/069739, EP 1733781, WO98/13124, WO02/074421 and WO03/00807 The cost of CO₂ capture using current technology, however, can be as high as $150 per ton - much too high for carbon emissions reduction applications. Furthermore, carbon dioxide capture is generally estimated to represent three fourths of the total cost of a carbon capture, storage, transport, and sequestration system.

Accordingly, there is a need for a new CO₂ separation system and method to make CO₂ separation and capture from power plants easier and more cost effective.

### BRIEF DESCRIPTION

The invention is defined by claim 1.

### DRAWINGS

These and other features, aspects, and advantages of the present invention will become better understood when the following detailed description of embodiments provided by way of example is read with reference to the accompanying drawings in which like characters represent like parts throughout the drawings, wherein:
FIG. 1. is a schematic depiction not according to the invention.
FIG. 2. is another schematic depiction not according to the invention.
FIG. 3. is another schematic depiction not according to the invention.
FIG. 4. is another schematic depiction of not according to the instant invention.
FIG. 5 is another schematic depiction not according to the invention.
FIG. 6 is another schematic depiction not according to the invention.
FIG. 7 is another schematic depiction not according to the invention.

### DETAILED DESCRIPTION

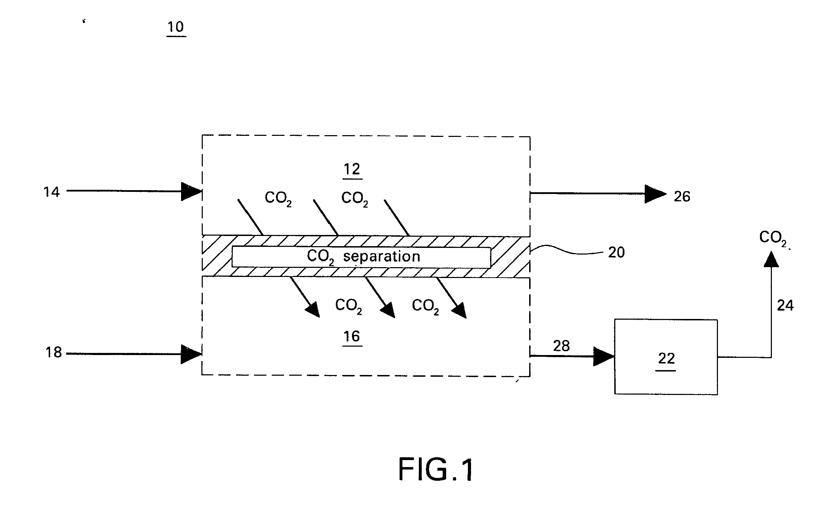

A carbon dioxide separation system 10 comprises a first flow path 12 for directing a fluid comprising carbon dioxide 14 therethrough and a second flow path 16 for directing a sweep fluid 18 therethrough, and a separator 20, for example a membrane, for separating the first and second flow paths (12, 16) and for promoting carbon dioxide transport therebetween (along the path of the arrows), as shown in FIG. 1.

Separator 20 comprises a material or structure that enables selective permeability of carbon dioxide. Any suitable material may be used for the separator 20 provided that that material is stable at the operating conditions and has the required permeance and selectivity at those conditions. Materials known to be selective for CO₂ include, for example, certain inorganic and polymer materials. Inorganic materials include microporous alumina, microporous carbon, microporous silica, microporous perovskite, zeolite and hydrotalcite materials.

While not to be limited by a particular theory, mechanisms for CO₂ selectivity in microporous materials include surface diffusion and capillary condensation. A material that has an affinity for CO₂ relative to other gases in a stream will show a preferred adsorption and surface diffusion of CO₂. Furthermore, the presence of the adsorbed CO₂ molecules, through capillary condensation, will effectively block the pore from the more weakly adsorbing gases, thereby hindering their transport. The performance properties of such inorganic membranes at a given operating condition can be improved by a person skilled in the art by modifying the surface, altering the pore size or changing the composition of the membrane. Hybrid membranes that incorporate inorganic particles within a polymeric matrix can show enhanced CO₂ selectivity properties at elevated operating conditions. Mixed matrix membranes that incorporate adsorbent inorganic particles such as zeolites or carbon within polymeric matrices also show enhanced properties at elevated operating conditions. The invention is not restricted to any particular membrane material or type and encompasses any membrane comprising any material that is capable of providing suitable levels of permeance and selectivity. That includes, for example, mixed matrix membranes, facilitated transport membranes, ionic liquid membranes, and polymerized ionic liquid membranes. In practice, separator 20 often comprises a separation layer that is disposed upon a support layer.

For asymmetric inorganic membranes, the porous support can comprise a material that is different from the separation layer. Support materials for asymmetric inorganic membranes include porous alumina, titania, cordierite, carbon and metals. In one embodiment the support material is a porous metal and the separation layer is disposed within the pores of the metal, rather than upon the surface of the metal substrate. Most materials that are suitable as selective layers are inorganic, ceramic, polymeric or combinations thereof, which have low thermal transport properties. In one embodiment, the structure effectively provides the combined function of heat and selective mass transfer, with the connected porous network of high conductivity metal particles providing effective heat transfer and the separation layer disposed within the pores providing the selective mass transport.

Separator 20 physically separates first flow path 12 and second flow path 16 and promotes carbon dioxide transport therebetween. A carbon dioxide separation unit 22 is in flow communication with second flow path 16 and receives the sweep fluid 18 8 and CO₂ to isolate the carbon dioxide 26 contained therein. The carbon dioxide 26 can be sequestered, stored, recirculated, used for additional processes or otherwise utilized after isolation and removal.

Fluid comprising carbon dioxide 14 is an exhaust gas, for example, an exhaust gas having a temperature in the range between about 30° C to about 700° C. In addition, this invention can be utilized with fluids containing carbon dioxide 14 over a wide range of temperatures. This system can be utilized over a wide range of systems for any exhaust gas, for example, furnace exhaust, thermal oxidizers, metal processing or any other industrial process. In fact, fluids containing carbon dioxide 14 can be treated at ambient temperature with a suitable separator 20 and sweep fluid 18 being selected.

Sweep fluid 18 is a condensable fluid, like steam for example. In another embodiment, sweep fluid 18 can be one or more of the following: refrigerants; alcohols, like ethanol; hydrocarbons like butane; fluorinated and non-fluorinated hydrocarbons, ketones, esthers, and ethers; and siloxanes. In addition, while this invention is discussed in relation to CO₂ capture systems, a material selective to other constituents within an exhaust gas steam, for example, CO, nitrous oxide (NOx), or acid gases like hydrogen sulfide (H₂S), sulfuric acid (H₂SO₄) or hydrochloric acid (HCl) or other pollutants or species, may be utilized to capture the other constituents in a similar fashion. In addition, a material selective to Oxygen can be used in a similar manner as described herein to help strip O₂ in plants that require an Air Separation Unit (ASU).

Referring once again to FIG. 1, in one example, an exhaust gas 14 containing CO₂ is directed along first flow path 12 and a sweep steam flow 18 is directed along second flow path 16. The separator 20 is selective to CO₂ and as the sweep steam flow 18 has a significantly lower CO₂ partial pressure than that of the exhaust gas 14 containing CO₂, the CO₂ is drawn into the sweep steam flow 18 through separator 20. Accordingly, the stream flowing out of first flow path 12 is a low-CO₂ content flow 26 that can be recycled or released to the atmosphere and the stream flowing out of second flow path 16 is a high-CO₂ content flow 28 that is directed to carbon dioxide separation unit 22 to separate and isolate the CO₂ 24. The separator 22 is selective to CO₂ through principles of, for example, boiling point, chemical absorption or adsorption, molecular size, density, or the like. Depending on the membrane material and configuration, the gas temperatures may be from 30°C to about 1500° C, as specified and discussed herein.

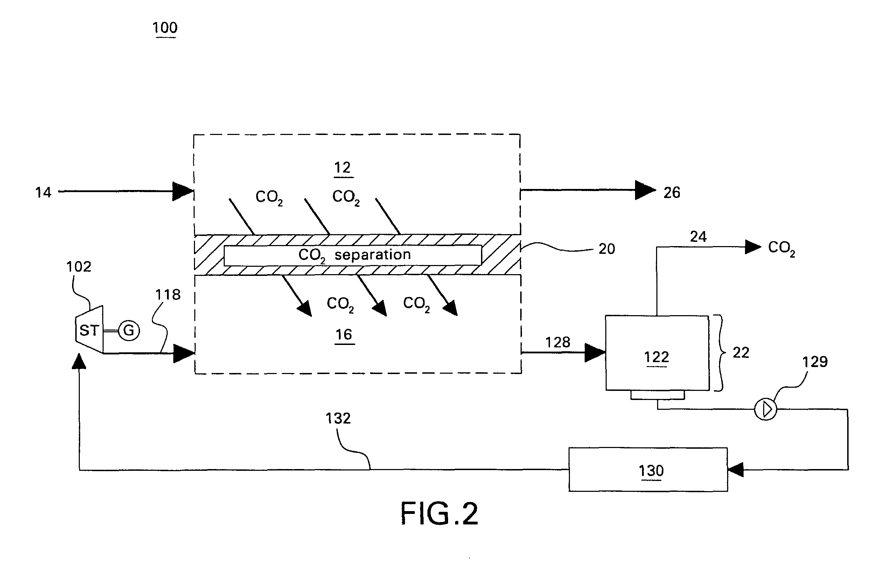

System 100 further comprises a steam turbine 102 for generating electricity via generator 104 and for generating a low-pressure steam sweep flow 118 (for example, having a pressure in the range between about 0.03 bar to about 10 bar), as shown in FIG.2. The stream flowing out of second flow path 16 is a high-CO₂ content steam flow 128 that is directed to carbon dioxide separation unit 22 to separate and isolate the CO₂ 24. In one embodiment, carbon dioxide separation unit 22 is a condenser 122 that condenses the steam and isolates the non-condensable CO₂ for easy separation. The condensed steam (now water) is then directed, often via pump 129, through a heat recovery steam generator (HIZSG) 130 to produce steam 132 (for example, having a pressure between about 20 to about 130 bar and at a temperature between about 300° C to about 700° C) that is introduced into steam turbine 102. The low-pressure steam sweep flow 118 (for example, having a temperature between about 20° C to about 200° C) can also be used to cool the fluid comprising carbon dioxide 14 introduced via first flow path 12, if for example, the fluid 14 is a high temperature exhaust gas. This embodiment is particularly advantageous because the large driving force required for CO₂ removal can be obtained by using the low pressures typically associated at the exit of steam turbines, thus providing more efficient CO₂ removal. Integration of the steam cycles and the CO₂ removal system are feasible because steam cycles are typically co-located adjacent to CO₂ containing exhaust streams.

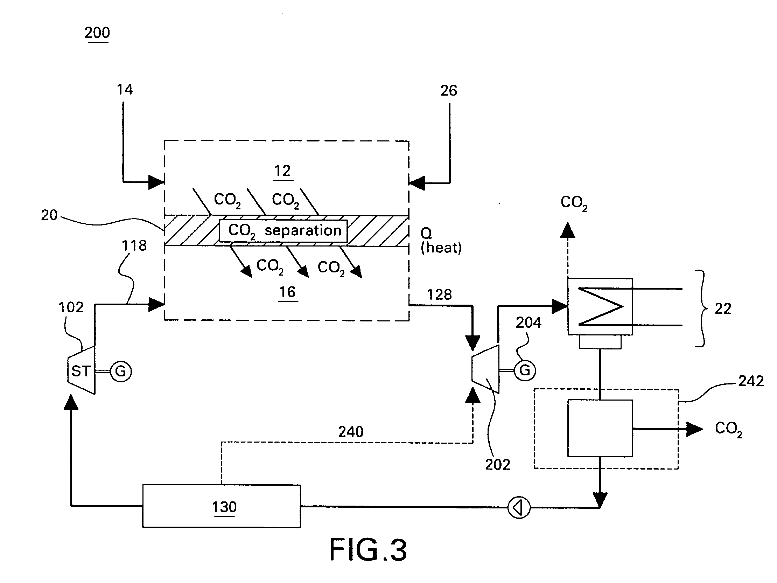

System 200 further comprises a second steam turbine 202 for generating additional electricity via generator 204, as shown in FIG. 3. As discussed above, the CO₂ flows across the separator 20 and into sweep flow 118. The sweep flow 118, (for example, having a pressure between about 1 bar to about 40 bar and at a temperature between about 100° C to about 450° C, and often between about 15 bar to about 30 bar and at a temperature between about 200° C to about 350° C) therefore, increases in volume due to the addition of the CO₂. Additionally, if the sweep flow 118 is also used to cool the fluid comprising carbon dioxide 14, for example exhaust gas, the high-CO₂ content steam flow 128 exiting second flow path, will also have an increased temperature (for example in the range between about 400° C to about 600° C). This higher volume, higher temperature high-CO₂ content steam flow 128 is directed into second steam turbine 202 for the generation of additional electricity via generator 204. Additionally, a slipstream of low-pressure steam 240 can be directed from the HRSG 130 to the second steam turbine 202 to boost the flow of the high-CO₂ content steam flow 128 as it enters second steam turbine 202 and recovers heat more efficiently in HRSG 130. This particular embodiment is advantageous as it combines both a CO₂ removal process with a reheat stage within the steam cycle. Additionally, higher flow is achieved in second steam turbine 202 due to the combined effect of the high-CO₂ content steam flow 128 and the slipstream of low-pressure steam 240. Furthermore, it should be noted that the effectiveness of the reheat stage will increase with increased size and so will the CO₂ capture performance for a given membrane separation efficiency. From a power plant efficiency standpoint, improvement in efficiency as more CO₂ is captured is unique to this invention and in fact in most CO₂ capture methods the efficiency goes down (typically precipitously) as more CO₂ is removed.

System 200 may optionally include an additional CO₂ cleanup unit 242 to remove any dissolved CO₂ from the water flowing out of condenser 122 prior to the waters entry into the HRSG 130. One option for removal of the dissolved CO₂ from the water is stripping, for example, bringing the water flowing out of condenser 122 into contact with a gaseous stream, for example steam or air (not shown). Additionally, further chemical treatment may also be applied to remove carbon ions down to a lower level than is practical with a stripping process.

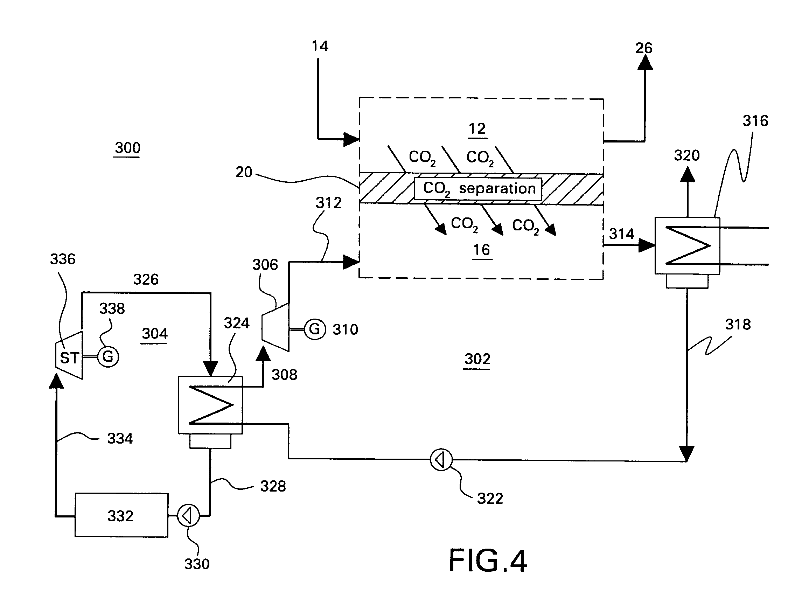

In an embodiment of the invention 300, an organic rankine cycle 302 is combined with a steam rankine cycle 304 as shown in FIG 4. In this embodiment, an organic rankine cycle (ORC) turbine 306 receives an organic vapor 308 and expands the vapor to power generator 310 to generate electricity and produces an organic sweep stream 312 that is directed along second flow path 16. As described similarly above, CO₂ passes from the fluid comprising carbon dioxide 14, for example exhaust gas, to the organic sweep stream 312 through separator 20 to produce a high high-CO₂ content flow 314. The high-CO₂ content flow 314 is directed to an organic fluid condenser 316 where the organic fluid carrier is condensed to an organic liquid 318 (for example, at a pressure between about 0.03 to about 10 bar and a temperature of between about 15° C to about 40° C) and the non-condensable CO₂ 320 is separated out.

The organic fluid 318 is directed, typically via a pump 322, to an organic vapor generator 324 where heat is applied to the organic fluid 318, and the organic fluid 318 undergoes a phase change to organic vapor 308. The organic vapor 308 is then directed to ORC turbine 306.

In one embodiment, the heat applied to the organic fluid 318 (for example, at a pressure between about 5 bar to about 50 bar) in the organic vapor generator 324 can be applied by a low-pressure steam flow 326 (for example, at a pressure between about 0.5 to about 10 bar). The low-pressure steam flow 326 is directed to the organic vapor generator 324 and is condensed to produce a water flow 328 (for example, having a temperature between about 70 to about 170°C). The heat is transferred from the low-pressure steam flow 326 to the organic liquid 318 thereby producing the organic vapor 308 (for example, having a temperature between about 65° C to about 165° C) and a water flow 328, respectively, in the two interconnected systems.

The water flow 328 is directed, typically via a pump 330, to an HRSG 332 where the water is converted to a high temperature steam flow 334 (for example, having a pressure between about 20 to about 150 bar and a temperature between about 300° C to about 700° C). The high temperature steam flow 334 is expanded in a steam turbine 336 to produce electricity via generator 338 and low-pressure steam flow 326. This embodiment does not need to have any additional water treatment as the correct organic fluid will not contain dissolved CO₂ within it as a liquid.

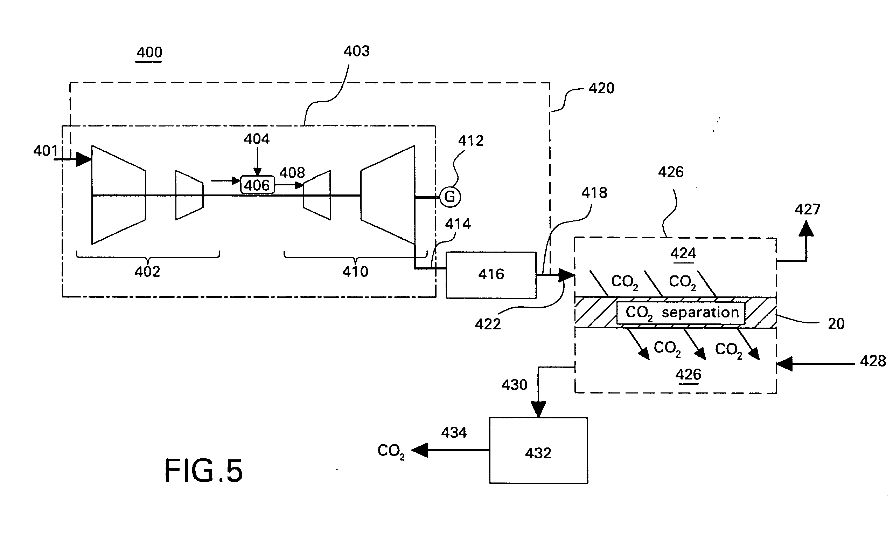

A gas turbine system 403 is included as shown in FIG. 5. Air 401 is compressed in the compression section 402 and then mixed with a fuel 404 and combusted in combustor 406. The resulting high temperature gases 408 are expanded in turbine section 410 to generate electricity via generator 412 and an exhaust gas 414. The exhaust gas 414 is directed to an HRSG 416 where the heat from the exhaust gas 414 is used to generate additional electricity in a steam cycle or other bottoming cycle (not shown) and a reduced temperature exhaust gas 418 (for example, having a temperature in the range between about 50° C to about 100° C). A first portion 420 of the reduced temperature exhaust gas 418 can optionally be recycled back to mix with the air 401 that is introduced into compressor section 402 to increase the overall CO₂ content in the reduced temperature exhaust gas 418 and to improve the extraction efficiency of the system 400. Ideally, the CO₂ content of reduced temperature exhaust gas 418 should be in the range between about 8% by volume to about 15% by volume for improved extraction efficiency through a carbon dioxide extraction system. In order to achieve these levels of CO₂ such technologies as exhaust gas recirculation can be employed.

A second portion 422 of the reduced temperature exhaust gas 418 is directed into a first flow path 424 of a carbon dioxide separation system 426. A sweep fluid 428 is directed along a second flow path 426. A separator 20, for example a membrane, is positioned between first and second flow paths 424, 426 for separating the first and second flow paths 424, 426 and for promoting carbon dioxide transport therebetween (along the path of the arrows). A low-CO₂ content flow 427 is directed out of first flow path 424 to be recycled or released to the atmosphere and a high-CO₂ content flow 430 is directed to a carbon dioxide separation unit 432 to separate and isolate the CO₂ 434.

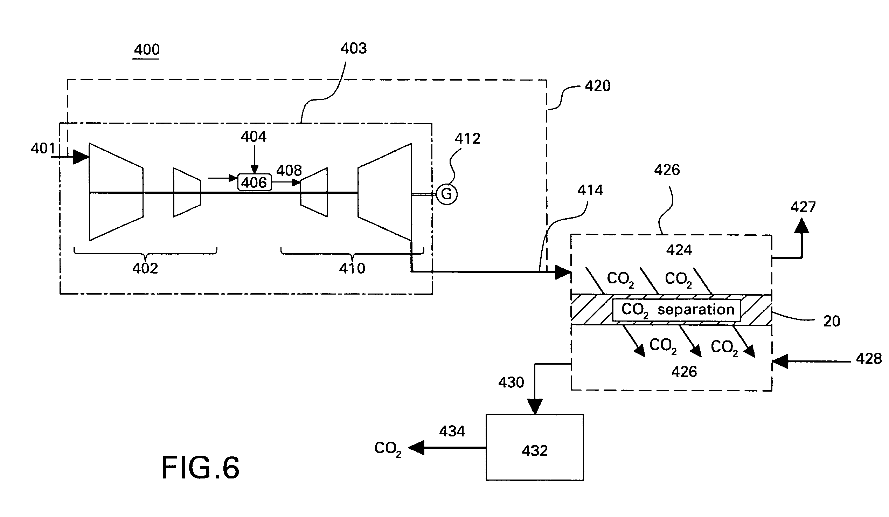

In FIG. 6, the exhaust gas 414 is directed into first flow path 424 of a carbon dioxide separation system 426 rather than through an intermediate HRSG. In certain embodiments of the carbon dioxide separation system 426, the separator 20 is compatible with high temperatures, for example, temperatures exceeding 500C.

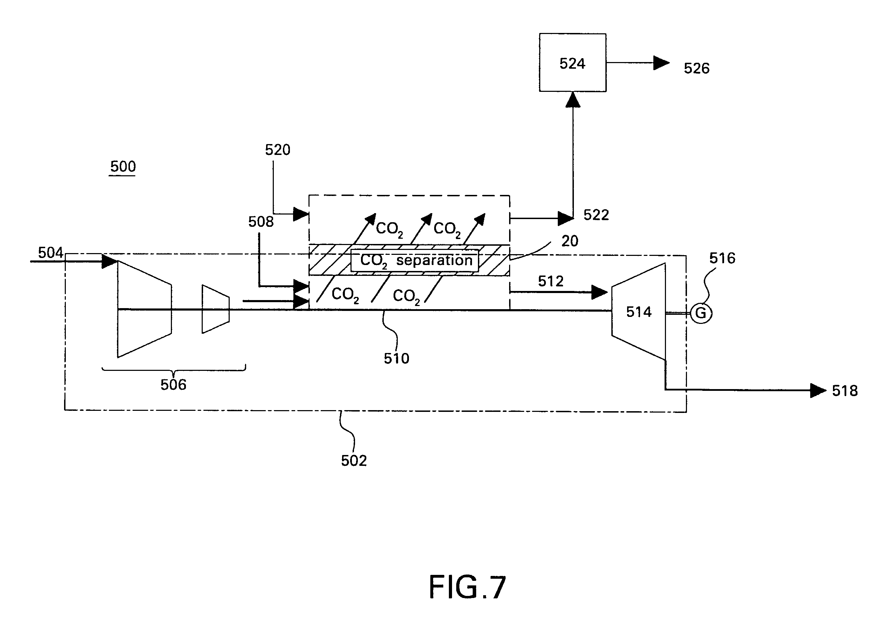

In 500, a gas turbine system 502 is included as shown in FIG. 7. Air 504 is compressed in the compression section 506 and then mixed with a fuel 508 and combusted in combustor 510 (for example, having a pressure in the range between about 10 to about 60 bar, and often between about 15 to about 45 bar). The resulting high temperature gases 512 (for example, having a temperature in the range between about 1000° C to about 1600° C) are expanded in turbine section 514 to generate electricity via generator 516 and an exhaust gas 518.

The combustor 510 is at least partially defined by separator 20. As the air 504 and fuel 508 combust within the combustor 510, CO₂ is generated. Due to the high pressure within combustor 510 and the low partial pressure of CO₂ present in a sweep stream 520 adjacent separator 20 (external to the combustor 510), the CO₂ migrates across separator 20 into sweep stream 520 thereby generating a high-CO₂ content flow 522 that is directed to a carbon dioxide separation unit 524 to separate and isolate the CO₂ 526. Accordingly, the exhaust gas 518 has significantly reduced CO₂ levels.

## Claims

1. A carbon dioxide separation system (10) comprising:
a first flow path (12) for directing a fluid comprising carbon dioxide (14) therethrough;
a second flow path (16) for directing a sweep fluid (18) therethrough;
a separator (20) comprising a material with selective permeability of carbon dioxide for separating said first and said second flow paths (12, 16) and for promoting carbon dioxide transport therebetween;
a carbon dioxide separation unit (22) in fluid communication with said second flow path (16) for separating the transported carbon dioxide (24) from the sweep fluid (18);
**characterised in that** the system further comprises an organic rankine cycle (302) to generate the sweep fluid.

2. The carbon dioxide separation system (10) in accordance with claim 1, wherein said fluid (14) is an exhaust gas.

3. The carbon dioxide separation system (10) in accordance with claim 1, wherein said sweep fluid (18) is a condensable fluid.

4. The carbon dioxide separation system (10) in accordance with claim 1, wherein said sweep fluid (18) is an organic compound.

5. The carbon dioxide separation system in accordance with any one of the preceding claims, wherein said sweep fluid is selected from the group consisting of refrigerants; alcohols; fluorinated and non-fluorinated hydrocarbons, ketones, esthers, and ethers; siloxanes and combinations thereof.

6. The carbon dioxide separation system (10) in accordance with claim 1, wherein said separator (20) comprises a material selected from the group of microporous carbon, microporous silica, microporous titanosilicate, microporous mixed oxide, and zeolite material, hybrid membranes, mixed matrix membranes, facilitaed transport membranes, ionic liquid membranes and polymerized ionic liquid membranes.

7. The carbon dioxide separation system in accordance with claim 1, further comprising a steam condenser rejecting heat to said organic rankine cycle.

8. The carbon dioxide separation system in accordance with claim 2, wherein said exhaust gas is produced from at least one of a gas turbine, a furnace, a thermal oxidizer, metal processing systems, or an industrial process.

## Patentansprüche

1. Kohlendioxid-Abscheidesystem (10), aufweisend:
einen ersten Durchflusspfad (12) zum Durchleiten eines Kohlendioxid (14) aufweisenden Fluids durch diesen;
einen zweiten Durchflusspfad (16) zum Durchleiten eines Spülfluids (18) durch diesen;
einen Abscheider (20), der ein Material mit selektiver Durchlässigkeit für Kohlendioxid zum Trennen der ersten und zweiten Durchflusspfade (12, 16) und zum Unterstützen eines Kohlendioxidtransportes zwischen diesen aufweist;
eine Kohlendioxid-Abscheideeinheit (22) in Fluidverbindung mit dem zweiten Durchflusspfad (16) zum Abscheiden des transportierten Kohlendioxids (24) aus dem Spülfluid (18);
**dadurch gekennzeichnet, dass** das System ferner einen organischen Rankine-Zyklus (302) aufweist, um das Spülfluid zu erzeugen.

2. Kohlendioxid-Abscheidesystem (10) nach Anspruch 1, wobei das Fluid (14) ein Abgas ist.

3. Kohlendioxid-Abscheidesystem (10) nach Anspruch 1, wobei das Spülfluid (18) ein kondensierbares Fluid ist.

4. Kohlendioxid-Abscheidesystem (10) nach Anspruch 1, wobei das Spülfluid (18) eine organische Verbindung ist.

5. Kohlendioxid-Abscheidesystem (10) nach einem der vorstehenden Ansprüche, wobei das Spülfluid aus der aus Kältemitteln; Alkoholen, fluorierten und nicht-fluorierten Kohlenwasserstoffen, Ketonen, Esthern und Ethern, Siloxanen und Kombinationen davon bestehenden Gruppe ausgewählt ist.

6. Kohlendioxid-Abscheidesystem (10) nach Anspruch 1, wobei der Abscheider (20) ein aus der aus mikroporösem Kohlenstoff, mikroporösem Silizium, mikroporösem Titansilikat, mikroporösem Mischoxid und Zeolithmaterialien, Hybridmembranen, Mischmatrixmembranen, Membranen mit erleichtertem Transport, Ionenflüssigmembranen und polymerisierten Ionenflüssigmembranen ausgewähltes Material aufweist.

7. Kohlendioxid-Abscheidesystem nach Anspruch 1, das ferner einen Dampfkondensator aufweist, der Wärme an den organischen Rankine-Zyklus zurückführt.

8. Kohlendioxid-Abscheidesystem nach Anspruch 2, wobei das Abgas von wenigstens einer Gasturbine, einem Ofen, einem thermischen Oxidator, Metallverarbeitungssystemen oder einem industriellen Prozess erzeugtes Abgas ist.

## Revendications

1. Système de séparation de dioxyde de carbone (10) comprenant :
un premier chemin d'écoulement (12) pour diriger un fluide comprenant du dioxyde de carbone (14) à travers celui-ci ;
un deuxième chemin d'écoulement (16) pour diriger un fluide de balayage (18) à travers celui-ci ;
un séparateur (20) comprenant un matériau ayant une perméabilité sélective au dioxyde de carbone pour séparer lesdits premier et deuxième chemins d'écoulement (12, 16) et pour favoriser le transport du dioxyde de carbone entre eux ;
une unité de séparation de dioxyde de carbone (22) en communication fluide avec ledit deuxième chemin d'écoulement (16) pour séparer le dioxyde de carbone transporté (24) du fluide de balayage (18) ;
**caractérisé en ce que** le système comprend en outre un cycle de Rankine organique (302) pour produire le fluide de balayage.

2. Système de séparation de dioxyde de carbone (10) selon la revendication 1, dans lequel ledit fluide (14) est un gaz d'échappement.

3. Système de séparation de dioxyde de carbone (10) selon la revendication 1, dans lequel ledit fluide de balayage (18) est un fluide condensable.

4. Système de séparation de dioxyde de carbone (10) selon la revendication 1, dans lequel ledit fluide de balayage (18) est un composé organique.

5. Système de séparation de dioxyde de carbone selon l'une quelconque des revendications précédentes, dans lequel ledit fluide de balayage est choisi dans l'ensemble comprenant les réfrigérants, les alcools, les hydrocarbures fluorés et non fluorés, les cétones, les esters et les éthers, les siloxanes et leurs combinaisons.

6. Système de séparation de dioxyde de carbone (10) selon la revendication 1, dans lequel ledit séparateur (20) comprend un matériau choisi dans l'ensemble comprenant le carbone microporeux, la silice microporeuse, le titanosilicate microporeux, les oxydes mixtes microporeux, et les matériaux de type zéolithe, les membranes hybrides, les membranes à faisceaux mixtes, les membranes à transport facilité, les membranes liquides ioniques et les membranes liquides ioniques polymérisées.

7. Système de séparation de dioxyde de carbone selon la revendication 1, comprenant en outre un condenseur de vapeurs rejetant de la chaleur dans ledit cycle de Rankine organique.

8. Système de séparation de dioxyde de carbone selon la revendication 2, dans lequel ledit gaz d'échappement est produit par au moins un élément parmi une turbine à gaz, un four, un oxydant thermique, des systèmes de traitement de métaux ou un processus industriel.
